(19) Europäisches Patentamt / European Patent Office / Office européen des brevets

(11) **EP 3 092 756 B1**

(12) **EUROPÄISCHE PATENTSCHRIFT**

(45) Veröffentlichungstag und Bekanntmachung des Hinweises auf die Patenterteilung:
**25.10.2017 Patentblatt 2017/43**

(51) Int Cl.:
***H04L 27/00*** *(2006.01)*

(21) Anmeldenummer: **15705176.4**

(22) Anmeldetag: **09.01.2015**

(86) Internationale Anmeldenummer:
**PCT/DE2015/100014**

(87) Internationale Veröffentlichungsnummer:
**WO 2015/104019 (16.07.2015 Gazette 2015/28)**

(54) **VERFAHREN UND VORRICHTUNG ZUM SPEKTRUM-MONITORING**

METHOD AND DEVICE FOR SPECTRUM MONITORING

PROCÉDÉ ET DISPOSITIF POUR LA SURVEILLANCE DU SPECTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.01.2014 DE 102014100251**

(43) Veröffentlichungstag der Anmeldung:
**16.11.2016 Patentblatt 2016/46**

(73) Patentinhaber: **LS Telcom AG 77839 Lichtenau (DE)**

(72) Erfinder:
- **CHRIST, Andreas 79110 Freiburg (DE)**
- **FELHAUER, Tobias 77797 Ohlsbach (DE)**
- **SCHÜSSELE, Lothar 77948 Friesenheim (DE)**
- **WEBER, Christian 77790 Steinach (DE)**

(74) Vertreter: **Eder Schieschke & Partner mbB Patentanwälte Elisabethstraße 34 80796 München (DE)**

(56) Entgegenhaltungen:
- **CHRISTIAN WEBER: "Automatic Radio Monitoring Automatic Radio Monitoring for Efficient Future Spectrum Management", LS SUMMIT 2013, [Online] Bd. July 2013, 3. Juli 2013 (2013-07-03), Seiten 1-15, XP055194279, Hochschule Offenburg DOI: http://www.lstelcom.com/fileadmin/content/events/ls_summit_13_presentations/4_Presentation_LS_Summit_2013_Christian_Weber.pdf**
- **G. MARK KAGARURA ET AL: "Evaluation of Spectrum Occupancy: A Case for Cognitive Radio in Uganda", IEEE 9TH INTERNATIONAL CONFERENCE ON MOBILE AD-HOC AND SENSOR NETWORKS, 11. Dezember 2013 (2013-12-11), - 13. Dezember 2013 (2013-12-13), Seiten 167-174, XP055194142, DOI: 10.1109/MSN.2013.66 ISBN: 978-0-76-955159-3**

EP 3 092 756 B1

**EP 3 092 756 B1**

**Beschreibung**

Die Erfindung betrifft ein Verfahren und eine Vorrichtung zum Spektrum-Monitoring eines vorgegebenen Frequenzbandes mit den Merkmalen des Oberbegriffs der Patentansprüche 1 bzw. 11. Der Bedarf an Funkkanälen für die drahtlose Kommunikation steigt in den letzten Jahren insbesondere durch die zunehmende Verwendung von mobilen Datenendgeräten, wie Smartphones, Notebooks und dergleichen, immer mehr an. Um eine möglichst störungsfreie Kommunikation zu gewährleisten, muss sichergestellt werden, dass die jeweils zugewiesenen Funkkanäle, sei es für die bidirektionale Kommunikation oder auch für Broadcasting-Zwecke, nicht gleichzeitig durch verschiedene Signale belegt werden. Andererseits wird es jedoch infolge der Vielzahl von störungsfrei zu übertragenden Signalen erforderlich, das vorhandenen Spektrum bzw. die jeweils zugewiesenen Kanäle, die durch ihre Bandbreite und Lage innerhalb des Spektrums definiert sind, möglichst vollständig bzw. optimal zu nutzen. Freie Kanäle bzw. Abschnitte des Spektrums müssen erfasst werden, um diese für bestimmte Kommunikationszwecke zuweisen zu können. Hierzu wurde und wird ein Spektrum Management System entwickelt, das dafür sorgen soll, dass dieser Bedarf an Bandbreite bzw. Kommunikationskanälen flexibler gedeckt werden kann. Es handelt sich hierbei um eine Kombination aus planerischen, administrativen und technischen Aufgaben.

Um das zur Verfügung stehende Spektrum, das ein vorgegebenes Frequenzband umfasst, optimal nutzen zu können, ist es erforderlich, ein sogenanntes Spektrum Monitoring durchzuführen. Unter einem Frequenzband sollen im Folgenden ein oder mehrere Abschnitte eines Frequenzspektrums verstanden werden, unabhängig, ob diese Abschnitte zusammenhängen oder getrennte Teile des Frequenzspektrums darstellen. Unter einem Funkkanal ist ein zugewiesenes Teil-Frequenzband innerhalb des vorgegebenen Frequenzbandes zu verstehen, das üblicherweise (innerhalb eines vorbestimmten geographischen Gebiets) für die Übertragung eines Kommunikationssignals zugewiesen wird. Das Spektrum Monitoring liefert als Ergebnis die Information, welche Frequenzen des vorgegebenen Frequenzbandes bzw. welche Kanäle mit Signalen belegt oder frei sind. Freie Kanäle können dann zur Signalübertragung zugewiesen werden. Mit dem Prozess des Spektrum Monitoring kann also der Ist-Zustand der Funkkanalnutzung in einem bestimmten geographischen Gebiet erfasst werden. Ganz allgemein können dabei nicht nur freie oder nur wenig genutzte Funkkanäle aufgefunden werden, sondern auch unautorisierte Funkemissionen ermittelt werden.

Durch das Zusammenwirken von Spektrum Monitoring und Spektrum Management kann eine zuverlässigere und realistischere Funknetz-Datenbank geschaffen werden. Dies ermöglicht neue Möglichkeiten der Funkfrequenz- bzw. Kanalvergabe. Beispielsweise kann ein zukünftiges Modell für die dynamische Funkfrequenzvergabe einen "Spektrum Broker" vorsehen, über den zeitlich begrenzte Funklizenzen gehandelt werden. Ein Verfahren zur Automatisierung eines solchen Zusammenwirkens ist aus der Veröffentlichung CHRISTIAN WEBER: "Automatic Radio Monitoring Automatic Radio Monitoring for Efficient Future Spectrum Management",LS SUMMIT 2013, Bd. July 2013, 3. Juli 2013 (2013-07-03), Seiten 1-15,Hochschule Offenburg, bekannt. Aufgabe des Spektrum Monitoring ist es also, in einem vorgegebenen Frequenzband festzustellen, bei welchen Frequenzen bzw. in welchen Kanälen an einem bestimmten geographischen Ort aktuell ein Signal detektierbar ist.

Hierzu ist es bekannt, an einem vorgegebenen Messort die spektrale Leistungsdichte S(f) des elektromagnetischen Spektrums in dem vorgegebenen Frequenzband zu erfassen. Das so bestimmte Leistungsdichtespektrum, d.h. die spektrale Leistungsdichte S(f) im jeweils vorgegebenen Frequenzband, enthält somit Rauschanteile und die Anteile eines oder mehrerer Signale. Zur Detektion, ob bei einer bestimmten Frequenz bzw. innerhalb eines bestimmten Kanals des vorgegebenen Frequenzbandes ein Signal vorhanden ist oder nicht, wird ein Schwellenwert $\lambda$ für die Leistungsdichte (beispielsweise in W/Hz oder dBm/Hz) festgelegt, wobei bei Überschreiten des Schwellenwertes $\lambda$ auf das Vorhandensein eines Signals erkannt wird und andernfalls auf eine freie Frequenz bzw. einen freien Kanal geschlossen wird. Selbstverständlich kann auf diese Weise nicht festgestellt werden, ob Signale übertragen werden, deren Leistung im Bereich des Rauschens liegen und die beispielsweise durch kohärente Empfangsverfahren detektierbar sind.

Die ITU empfiehlt beispielsweise einen statischen Schwellenwert $\lambda$ von 10 dB oberhalb der mittels "Noise Riding" bestimmten mittleren Rauschleistung im gesamten vorgegebenen Frequenzband (ITU, Handbook Spektrum Monitoring, Edition 2011, S. 177). Andere Untersuchungen verwenden einen statischen Schwellenwert $\lambda$, der z.B. 5 dB oberhalb der bestimmten mittleren Rauschleistung liegt (z.B. Meftah Mehdawi et al., Spectrum Occupancy Survey In HULL-UK for Cognitive Radio Applications: Measurement & Analysis, IJSTR, vol. 2, Issue 4, April 2013).

Solche statischen bzw. nur auf die mittlere Rauschleistung bezogenen Schwellenwerte $\lambda$ weisen jedoch den Nachteil auf, dass zu deren Bestimmung lediglich die mittlere Rauschleistung berücksichtigt wird und ein absoluter Wert für die Varianz des Rauschens angenommen wird. Durch diese Vorgehensweise ist eine Angabe der Falschalarmwahrscheinlichkeit nicht möglich.

Ausgehend von diesem Stand der Technik liegt der Erfindung die Aufgabe zugrunde, ein Verfahren und eine Vorrichtung zum Spektrum-Monitoring eines vorgegebenen Frequenzbandes zu schaffen, welches diesen Nachteil vermeidet und die Wahrscheinlichkeit von Fehldetektionen reduziert.

Die Erfindung löst diese Aufgabe mit den Merkmalen der Patentansprüche 1 bzw. 11.

Die vorliegende Erfindung wird durch die Ansprüche 1-13 definiert und nur durch deren Umfang limitiert. In der

2

folgenden Beschreibung werden an manchen Stellen die mathematischen Größen S(f), λ, P$_{fa}$, h$_R$(s) auch als (S(f)), (λ), (P$_{fa}$) bzw. (h$_R$(s)) bezeichnet (d.h. die jeweilige Größe wird in Klammern gesetzt. Dabei hat die jeweilige Größe die gleiche Bedeutung (d.h. die Benutzung der Klammer ändert die Bedeutung der jeweiligen Größe nicht). Die Erfindung geht von der Erkenntnis aus, dass in der Praxis von Vorteil ist, die Detektion von Signalen beim Spektrum Monitoring so zu gestalten, dass ein vorgegebener Wert für die Falschalarmwahrscheinlichkeit P$_{fa}$ erreicht wird.

Als Falschalarmwahrscheinlichkeit wird dabei die Wahrscheinlichkeit bzw. der Wahrscheinlichkeitswert bezeichnet, mit dem ein Signal detektiert wird, obwohl im betreffenden Kanal bzw. bei der betreffenden Frequenz nur Rauschen vorliegt. Die Falschalarmwahrscheinlichkeit P$_{fa}$ und die Entdeckungswahrscheinlichkeit P$_d$, also die Wahrscheinlichkeit mit der zutreffend ein Signal detektiert wird, wenn auch ein Signal vorliegt, sind voneinander abhängig. Es ist also nicht möglich, unabhängig voneinander die Falschalarmwahrscheinlichkeit P$_{fa}$ zu minimieren und die Entdeckungswahrscheinlichkeit P$_d$ zu maximieren.

Erfindungsgemäß wird zunächst die spektrale Leistungsdichte S(f) im vorgegebenen Frequenzband für alle in dem Frequenzband enthaltenen Rausch- und Signalanteile bestimmt. Der Schwellenwert λ für die Erkennung von Signalen in dem erfassten Leistungsdichtespektrum (also dem betreffenden Signal-Rauschgemisch) wird dann jeweils so festgelegt, dass eine vorgegebene Falschalarmwahrscheinlichkeit P$_{fa}$ eingehalten wird. Hierzu wird der Schwellenwert λ abhängig von der Falschalarmwahrscheinlichkeit P$_{fa}$ und einer Schätzung der Verteilungsdichte h$_R$(S) des Rauschanteils, welcher in dem Leistungsdichtespektrum enthalten ist, berechnet.

Nach einer Ausgestaltung der Erfindung wird der Schwellenwert λ unter Verwendung einer aus dem Leistungsdichtespektrum ermittelten Sub-Häufigkeitsverteilung berechnet. Die Sub-Häufigkeitsverteilung sollte hierzu so gewählt werden, dass diese zumindest einen relevanten Teil der Rauschkomponenten innerhalb des gemessenen bzw. bestimmten Leistungsdichtespektrums beinhaltet. Hierdurch wird eine ausreichend genaue Schätzung der Verteilungsdichte des Rauschanteils gewährleistet. Als Sub-Häufigkeitsverteilung kann dabei sowohl die absolute als auch relative Häufigkeitsverteilung verwendet werden, insbesondere dann, wenn die Verteilungsdichte unter der Annahme bestimmt wird, dass diese einer bestimmten funktionalen Abhängigkeit folgt (wie die der Rayleigh- oder Gauß-Verteilung) und die Parameter der betreffenden vorausgesetzten Dichtefunktion mit einem mathematischen Verfahren der Ausgleichsrechnung, beispielsweise dem Least-Squares-Verfahren, bestimmt werden. Da die zu bestimmenden Parameter nur den charakteristischen Verlauf der Verteilung und nicht den Wert des Modalwertes betreffen, ist es auch nicht erforderlich, die Häufigkeits- bzw. Sub-Häufigkeitsverteilung, die zur Schätzung der Verteilungsdichte herangezogen wird, zu normieren. In den nachstehenden Beispielen wird jedoch zur Verbesserung der Anschaulichkeit des Verfahrens eine normierte (also eine relative) Sub-Häufigkeitsverteilung verwendet.

Zur Ermittlung der Sub-Häufigkeitsverteilung wird zunächst die Häufigkeitsverteilung des gesamten Leistungsdichtespektrums S(f) bestimmt. Aus dieser wird dann als maßgebliche (absolute oder relative) Sub-Häufigkeitsverteilung derjenige Abschnitt der gesamten Häufigkeitsverteilung verwendet, in welchem die Werte für die Häufigkeit einen peakartigen Verlauf zeigen und in welchem die Werte für die quantisierte Leistungsdichte zumindest den Bereich abdecken, in welchem reines Rauschen oder zumindest in hohem Maße überwiegendes Rauschen erwartet werden kann. Der Bereich, in dem reine Rauschanteile oder überwiegend nur Rauschanteile vorliegen, ermöglicht es, den Verlauf der zu erwartenden Verteilungsdichte des Rauschens auch außerhalb dieses Bereichs abzuschätzen, also auch in einem Bereich, in dem sich Rausch- und Signalanteile überlagern.

Der als Sub-Häufigkeitsverteilung verwendete Abschnitt der Häufigkeitsverteilung kann so gewählt werden, dass, von niedrigen zur höheren Werten der quantisierten Leistungsdichte gesehen, der erste auftretende peakartige Verlauf der Häufigkeitsverteilung in dem verwendeten Abschnitt enthalten ist, wobei die obere Grenze des Abschnitts in Richtung höherer Werte für die quantisierte Leistungsdichte vorzugsweise so gewählt wird, dass kein weiterer isolierter peakartiger Verlauf in dem Abschnitt enthalten ist. Auf diese Weise wird diejenige Sub-Häufigkeitsverteilung aus der gesamten Häufigkeitsverteilung ausgewählt, die auf alle Fälle auch einen relevanten Bereich der Rauschanteile umfasst.

Nach einer bevorzugten Ausführungsform der Erfindung wird zur Schätzung der Verteilungsdichte des Rauschanteils eine analytische Verteilungsdichtefunktion h$_R$(S) verwendet, wobei der oder die Parameter der Verteilungsdichtefunktion h$_R$(S) mittels eines mathematischen Verfahrens zur Ausgleichsrechnung, vorzugsweise mittels des Least-Squares-Verfahrens, derart bestimmt werden, dass die Verteilungsdichtefunktion h$_R$(S) möglichst optimal an den Verlauf der Sub-Häufigkeitsverteilung angepasst wird.

Da insbesondere für leistungsstärkere Werte der spektralen Leistungsdichte S(f) die Rauschanteile von Signalanteilen überlagert werden, ist es vorteilhaft, für die Durchführung der Ausgleichsrechnung nur ein Beobachtungsgebiet zwischen einem unteren und (insbesondere) einem oberen Wert für die spektrale Leistungsdichte der Sub-Häufigkeitsverteilung zu verwenden, wobei das Beobachtungsgebiet möglichst so gewählt werden sollte, dass die Werte für die Häufigkeit im Beobachtungsgebiet im Wesentlichen nur durch den Rauschanteil bestimmt sind.

Nach einer Ausgestaltung der Erfindung kann zur Bestimmung der spektralen Leistungsdichte S(f) im vorgegebenen Frequenzband nur eine einfache, d.h. einmalige Messung der spektralen Leistungs- oder Energiedichte durchgeführt werden. In diesem Fall eignet sich zur Schätzung der Verteilungsdichte h$_R$(S) des Rauschanteils eine logarithmierte Rayleighverteilung. Diese ist durch die Gleichung:

$$h_R(S) = 10^{\frac{S}{10}} \frac{\ln(10)}{20\sigma^2} \, e^{-\frac{10^{\frac{S}{10}}}{2\sigma^2}} \qquad (1)$$

gegeben, wobei mit S die spektrale Leistungsdichte bezeichnet ist und der Parameter σ so zu bestimmen ist, dass die Verteilungsdichte $h_R(S)$ die Häufigkeits- oder Sub-Häufigkeitsverteilung im Beobachtungsbereich möglichst gut annähert.

Der obere Wert der spektralen Leistungsdichte des Beobachtungsgebiets kann dabei so gewählt werden, dass er gleich dem Wert der spektralen Leistungsdichte ist, bei welchem der Modalwert der Häufigkeitsverteilung vorliegt. Es hat sich in der Praxis herausgestellt, dass der obere Wert der spektralen Leistungsdichte des Beobachtungsgebiets auch kleiner gewählt werden kann als der Wert der spektralen Leistungsdichte, bei welchem das Maximum der Häufigkeitsverteilung vorliegt, beispielsweise gleich dem Wert der spektralen Leistungsdichte, bei dem der Wert der Häufigkeitsverteilung einen Wert von 80 bis 90 Prozent des Maximums erreicht. Auch in diesem Fall ergibt sich noch eine ausreichend gute Schätzung für die Häufigkeitsverteilung des Rauschens bei einer Einfachmessung.

Nach einer anderen Ausführungsform des Verfahrens nach der Erfindung können zur Bestimmung der spektralen Leistungsdichte S(f) im vorgegebenen Frequenzband auch mehrfache Messungen durchgeführt und die Ergebnisse der mehrfachen Messungen gemittelt werden. In diesem Fall eignet sich zur Schätzung der Verteilungsdichte $h_R(S)$ des Rauschanteils nach dem zentralen Grenzwertsatz eine Normal- oder Gauß-Verteilung. Diese folgt der Gleichung:

$$h_R(S) = \frac{1}{\sqrt{2\pi\sigma^2}} \, e^{-\frac{1}{2}\left(\frac{S-\mu}{\sigma}\right)^2} \qquad (2)$$

Im Gegensatz zur vorgenannten logarithmierten Rayleigh-Verteilung sind in diesem Fall also zwei Parameter, nämlich die Standardabweichung σ und der Erwartungswert μ zu bestimmen.

In diesem Fall kann der obere Wert der spektralen Leistungsdichte des Beobachtungsgebiets kleiner oder gleich dem Wert der spektralen Leistungsdichte gewählt werden, bis zu welchem, in Richtung zunehmender Werte für die spektrale Leistungsdichte S(f) gesehen, die abfallende Flanke der Häufigkeitsverteilung noch symmetrisch zum entsprechenden Bereich der ansteigenden Flanke ist oder nur eine zulässige Abweichung innerhalb einer vorgegebenen Schranke aufweist. Diese Symmetrieprüfung ermöglicht es festzustellen, bis zu welchem Wert für die spektrale Leistungsdichte (genau genommen bis zu welchem Bin, d.h. der quantisierten Leistungsdichte der Häufigkeitsverteilung) die Häufigkeitsverteilung noch im Wesentlichen ausschließlich durch Rauschanteile bestimmt ist.

Wenn die Verteilungsdichtefunktion hinsichtlich des Typs der (numerischen oder analytischen) Funktion bestimmt ist und auch der oder die Parameter mittels Ausgleichsrechnung unter Verwendung der Daten des Beobachtungsgebiets der (Sub-) Häufigkeitsverteilung ermittelt sind, kann der Schwellenwert λ unter Verwendung der Beziehung

$$\int_{-\infty}^{\lambda} h_R(S)dS = 1 - P_{fa} \qquad (3)$$

berechnet werden, wobei mit $h_R(S)$ die Verteilungsdichtefunktion des Rauschanteils und mit $P_{fa}$ die Falschalarmwahrscheinlichkeit bezeichnet sind.

Die erfindungsgemäße Vorrichtung zum Spektrum-Monitoring eines vorgegebenen Frequenzbandes umfasst eine Erfassungseinheit zur Erfassung der spektralen Leistungsdichte S(f) innerhalb des vorgegebenen Frequenzbandes für alle in dem Frequenzband enthaltenen Rausch- und Signalanteile und eine mit der Erfassungseinheit verbundene Auswerteeinheit, welcher die Daten der spektralen Leistungsdichte S(f) zuführbar sind, wobei die Auswerteeinheit für das Detektieren eines oder mehrerer Signale innerhalb des vorgegebenen Frequenzbandes ausgebildet ist. Die Auswerteeinheit vergleicht hierzu die ermittelten Daten der spektralen Leistungsdichte S(f) mit einem vorgegebenen Schwellenwert A. Die Auswerteeinheit ist erfindungsgemäß so ausgebildet, dass sie diesen Schwellenwert λ abhängig von einer Schätzung der Verteilungsdichte des Rauschanteils der Daten der spektralen Leistungsdichte S(f) im vorgegebenen Frequenzband und einem vorgegebenen Wert für die Falschalarmwahrscheinlichkeit berechnet, wobei der Schwellenwert (A) unter Verwendung einer aus dem Leistungsdichtespektrum (S(f)) ermittelten Sub-Häufigkeitsverteilung berechnet wird, wobei zur Ermittlung der Sub-Häufigkeitsverteilung die Häufigkeitsverteilung der spektralen Leistungsdichte (S(f)) im gesamten vorgegebenen Frequenzband bestimmt wird, und wobei als Sub-Häufigkeitsverteilung derjenige Abschnitt der Häufigkeitsverteilung verwendet wird, in welchem die Werte für die Häufigkeit einen peakartigen Verlauf zeigen und in welchem die Werte für die quantisierte Leistungsdichte (S(f)) zumindest den Bereich abdecken, in welchem reines Rauschen erwartet werden kann.

Die Erfassungseinheit kann als Spektrumanalysator ausgebildet sein, dem an einem oder mehreren Eingangsports das zu erfassende Eingangssignal zugeführt wird. Mehrere Eingangsports können dazu dienen, verschiedenen Antennen anzuschließen, die unterschiedliche Teile des zu untersuchenden Spektrums bzw. der zu untersuchenden vorgegebenen Bandbreite abdecken. Die an den einzelnen Eingangsports anliegenden Signale oder ein jeweils hieraus abgeleitetes Signal, können dann, beispielsweise über eine Schalteinheit, einem gemeinsamen Auswertepfad zugeführt werden, der durch nachgeschaltete Einheiten gebildet ist. Der gemeinsame Auswertepfad kann ein durchstimmbares Bandpassfilter aufweisen, das schrittweise so durchgestimmt wird, dass das vorgegebene Frequenzband abgedeckt wird.

Das in jedem Schritt gefilterte Signal wird über ein vorbestimmbares Zeitintervall abgetastet, z.B. mit 1024 Abtastwerten, und aus den digitalisierten Abtastwerten werden mittels einer numerischen Frequenztransformation, beispielsweise der Fast-Fourier-Transformation (FFT), Daten der spektralen Leistungsdichte für das betreffende aktuelle Frequenzband des Bandpassfilters ermittelt. Aus den in jedem Schritt ermittelten Daten der spektralen Leistungsdichte können schließlich die Daten für die spektrale Leistungsdichte S(f) im gesamten vorgegebenen Frequenzband zusammengesetzt bzw. ermittelt werden.

Die Auswerteeinheit kann dann mit den so ermittelten Daten das vorstehend erläuterte Verfahren nach der Erfindung durchführen.

Weitere Ausführungsformen der Erfindung ergeben sich aus den Unteransprüchen.

Die Erfindung wird nachstehend anhand in der Zeichnung dargestellter Ausführungsbeispiele näher erläutert. In der Zeichnung zeigen:

Fig. 1    ein schematisches Blockdiagram einer Ausführungsform einer Vorrichtung zum Spektrum-Monitoring eines vorgegebenen Frequenzbandes nach der Erfindung;

Fig. 2    ein Diagramm eines unkorrigierten Leistungsdichtespektrums eines Signal-Rausch-Gemischs, welches mittels einer gemittelten Messreihe im Frequenzband von 400 MHz bis 900 MHz bestimmt wurde;

Fig. 3    ein Diagramm eines zur Korrektur der Eigenschaften der Erfassungseinheit bei terminierten Eingangsports erfassten Leistungsdichtespektrums im Frequenzband von 20 MHz bis 6 GHz;

Fig. 4    einen Ausschnitt aus dem Diagramm nach Fig. 3 im Bereich von 1220 MHz bis 1300 MHz, in welchem eine durch das durchstimmbare Filter verursachte Periodizität erkennbar ist, sowie einen entsprechenden korrigierten Bereich für das Leistungsdichtespektrum in diesem Frequenzband;

Fig. 5    ein Diagramm eines korrigierten Leistungsdichtespektrums, das nur Rauschen beinhaltet, im selben Frequenzbereich wie das Diagramm in Fig. 3

Fig. 6    ein korrigiertes Leistungsdichtespektrum eines Signal-Rausch-Gemisches bei einer Einfachmessung;

Fig. 7    ein Diagramm einer optimierten Häufigkeitsverteilung für das in Fig. 6 dargestellte, korrigierte Leistungsdichtespektrum für eine Einfachmessung;

Fig. 8    ein Diagramm eines optimierten Ausschnitts der Häufigkeitsverteilung in Fig. 7 mit angepasster logarithmierter Rayleigh-Verteilung als Verteilungsdichtefunktion;

Fig. 9    ein korrigiertes Leistungsdichtespektrum eines Signal-Rausch-Gemisches bei einer Mehrfachmessung;

Fig. 10    ein Diagramm einer optimierten Häufigkeitsverteilung für das in Fig. 10 dargestellte, korrigierte Leistungsdichtespektrum für eine Mehrfachmessung; und

Fig. 11    ein Diagramm eines optimierten Ausschnitts einer Häufigkeitsverteilung für ein Leistungsdichtespektrum, das mittels Mehrfachmessung erfasst wurde, mit angepasster Normalverteilung als Verteilungsdichtefunktion.

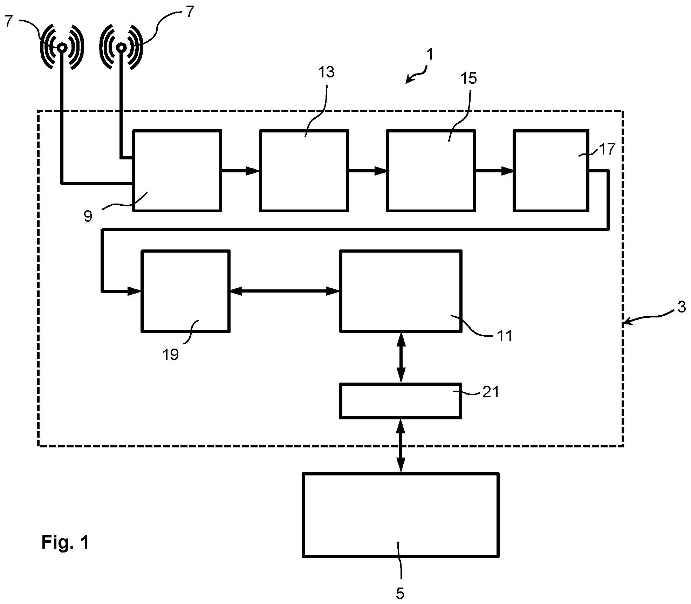

Fig. 1 zeigt ein schematisches Blockdiagramm einer Vorrichtung 1 zum Spektrum-Monitoring eines vorgegebenen Frequenzbandes, welche eine Erfassungseinheit 3, die als FFT-Spektrumanalysator ausgebildet sein kann, und eine mit der Erfassungseinheit 3 verbundene Auswerteeinheit 5 aufweist. An mehreren, im dargestellten Ausführungsbeispiel zwei, Eingangsports der Erfassungseinheit 3 ist jeweils eine Empfangsantenne 7 zum Empfang eines Messsignals angeschlossen. Mehrere verschiedene Empfangsantennen 7 können für eine Vorrichtung 1 insbesondere dann erforderlich sein, wenn das zu messende Frequenzband den frequenzabhängigen Empfindlichkeitsbereich der einzelnen Empfangsantennen 7 überschreitet.

Jeder Eingangsport der Empfangseinheit 3 ist mit einem Eingangsport einer Schalteinheit 9 verbunden, die so ausgebildet ist, dass jeweils ein Eingangsport mit einem Ausgangsport der Schalteinheit 9 verbindbar ist. Selbstverständlich kann die Schalteinheit 9 so ausgebildet sein, dass diese von einer Steuereinheit 11 hinsichtlich des Durchschaltens eines ausgewählten Eingangsports auf den Ausgangsport angesteuert werden kann. Der Ausgangsport der Schalteinheit 9 ist mit einem Eingangsport einer Filtereinheit 13 verbunden. Die Filtereinheit 13 weist ein oder mehrere Vorauswahlfilter auf, die dazu dienen, die Bandbreite des am Eingangsport der Filtereinheit 13 zugeführten Signals auf eine vorgegebene Bandbreite zu begrenzen. Umfasst die Filtereinheit 13 mehrere Vorauswahlfilter, so kann die Filtereinheit 13 selbstverständlich ebenfalls ansteuerbar durch die Steuereinheit 11 ausgebildet sein. Die Steuereinheit 11 kann dann durch eine geeignete Ansteuerung ein ausgewähltes Vorauswahlfilter in den Pfad zwischen dem Eingangs- und Ausgangsport der Filtereinheit 13 schalten. Die Vorauswahlfilter sind als Bandpassfilter ausgestaltet, wobei die Bandbreite dieser Vorauswahlfilter beispielsweise auch auf jeweils diejenige Bandbreite abgestimmt sein kann, in welcher eine ausreichende Empfangsleistung durch eine bestimmte, dem Vorauswahlfilter zugeordnete Empfangsantenne 7 gewährleistet ist.

Der Ausgangsport der Filtereinheit 13 ist mit einem Eingangsport einer Empfangseinheit 15 verbunden. Die Empfangseinheit 15 umfasst ein durchstimmbares Filter, welches eine vorgegebene Bandbreite von beispielsweise 20 MHz aufweist. Das gesamte durch die Erfassungseinheit 3 abgedeckte Frequenzband kann beispielsweise von 20 MHz bis 6 GHz reichen. Eine von einer Empfangsantenne 7 abgedeckte Empfangsbandbreite kann beispielsweise einige 100 Megahertz abdecken.

Die Empfangseinheit 15 liefert an einem Ausgangsport ein Empfangssignal, welches eine einstellbare, durchstimmbare Mittenfrequenz und eine vorgegebene Bandbreite aufweist, die deutlich kleiner ist, als die durch eine Empfangsantenne 7 oder ein Vorauswahlfilter abgedeckte Bandbreite. Das Ausgangssignal der Empfangseinheit 7 kann auch in einem Zwischenfrequenzbereich liegen, der deutlich kleiner ist, als der Frequenzbereich der von den Empfangsantennen 7 gelieferten Empfangssignale. Die Steuereinheit 11 kann die Empfangseinheit 15 hinsichtlich der Eigenschaften des durchstimmbaren Filters ansteuern, insbesondere hinsichtlich der Lage der Mittenfrequenz und der Bandbreite (bzw. der Grenzfrequenzen des betreffenden Filterbandes)

Der Ausgangsport der Empfangseinheit 15 ist mit einem Eingangsport einer Abtasteinheit 17 verbunden. Diese tastet das Ausgangssignal mit einer vorgegebenen Abtastrate ab und liefert eine vorgegebene Anzahl von Abtastwerten, welche in digitale Werte gewandelt werden. Beispielsweise können 1024 Abtastwerte für jede Mittenfrequenz bzw. Lage des Filterbandes des durchstimmbaren Filters der Empfangseinheit 15 erzeugt werden. Die Abtastrate muss selbstverständlich so gewählt werden, dass das am Eingangsport der Abtasteinheit anliegende Signal (welches im RF Frequenzbereich der Empfangsantennen oder in einem Zwischenfrequenzbereich liegen kann) so abgetastet wird, dass zumindest alle zu erwartenden spektralen Signalanteile detektiert werden können.

Die digitalen Abtastwerte, werden vom Ausgangsport der Abtasteinheit einer digitalen Signalprozessoreinheit 19 zugeführt. Diese erzeugt aus den zeitlichen Abtastdaten durch das Anwenden einer geeigneten Frequenztransformation, insbesondere der Fast-Fourier-Transformation (FFT), das Spektrum des betreffenden Signals. Die dieses Teilspektrum charakterisierenden digitalen Daten werden der Steuereinheit 11 zugeführt.

Die Steuereinheit steuert die Empfangseinheit 15 hinsichtlich der Mittenfrequenz (und gegebenenfalls auch der Bandbreite) des durchstimmbaren Filters so an, dass ein interessierender, vorgegebener Frequenzbereich beziehungsweise ein interessierendes, vorgegebenes Frequenzband abgedeckt wird. Das durchstimmbare Filter kann dabei so angesteuert werden, dass die Mittenfrequenz jeweils um die Bandbreite des durchstimmbaren Filters versetzt wird. Es ist jedoch auch eine überlappende Abtastung des gesamten, interessierenden Frequenzbandes möglich.

Die Steuereinheit 11 kann auch die digitale Signalprozessoreinheit 19 und die Abtasteinheit 17 in geeigneter Weise ansteuern, so dass jeweils der Abtastvorgang und der Vorgang des Berechnens des Spektrums der ermittelten Abtastwerte korrekt und zeitlich aufeinander abgestimmt durchgeführt werden.

Die Steuereinheit 11 führt die für jede Lage der Mittenfrequenz des durchstimmbaren Filters der Empfangseinheit 15 ermittelten Daten des zugehörigen Spektrums zu einem Datensatz zusammen, welcher das gesamte interessierende Frequenzband abdeckt. Wie vorstehend erwähnt, kann dabei auch eine Umschaltung zwischen den Vorauswahlfiltern und den Empfangsantennen 7 erfolgen. Im Ergebnis liegt ein vollständiger Datensatz vor, der das Leistungsdichtespektrum für das gesamte interessierende Frequenzband beschreibt.

An dieser Stelle sei darauf hingewiesen, dass die Empfangseinheit 15 und/oder die digitale Signalprozessoreinheit 19 und/oder die Steuereinheit 11 so ausgebildet sein können, dass aus einem Empfangssignal, insbesondere der detektierten Feldstärke eines Empfangssignals, die zugehörige Leistung ermittelt wird. Es kann jedoch auch die Empfangseinheit 15 so ausgebildet sein, dass das Ausgangssignal ein Maß für die elektrische Energie bzw. Leistung ist, die durch die Empfangsantennen 7 detektiert wird.

Für das nachstehend erläuterte Verfahren zur Festlegung eines Schwellenwerts für das Detektieren eines Signals in einem Signal-Rausch-Gemisch ist es jedoch unerheblich, ob dieses Verfahren auf ein Signal angewendet wird, welches Werte für die Empfangsleistung oder die (elektrische oder magnetische) Feldstärke liefert. Im Rahmen der vorliegenden Beschreibung wird daher der Begriff Leistung oder Leistungsdichtespektrum so verstanden, dass hierunter auch der Begriff Feldstärke oder "Feldstärkedichtespektrum" fallen kann.

Die Steuereinheit 11 kann das interessierende Leistungsdichtespektrum jeweils durch eine einmalige Messung, das heißt einen einmaligen Scan des interessierenden Frequenzbandes, durch eine entsprechende Ansteuerung des durchstimmbaren Filters der Empfangseinheit 15 erfassen oder aber eine vorgegebene Anzahl von Messungen durchführen, beispielsweise 50 Messungen, und die Daten der Messungen (an jeder Frequenz des Spektrums) mitteln.

Der Datensatz einer einfachen oder mehrfachen (gemittelten) Messung wird dann von der Steuereinheit 11 an eine Auswerteeinheit 5 übermittelt. Hierzu ist in der Erfassungseinheit 3 eine Interfaceeinheit 21 vorgesehen, welche eine bidirektionale Kommunikation zwischen der Steuereinheit 11 der Erfassungseinheit 3 und der Auswerteeinheit 5 ermöglicht. Die Auswerteeinheit 5 kann in beliebiger Weise mit der Interfaceeinheit 21 verbunden sein, insbesondere auch kabelgebunden oder drahtlos.

Die Auswerteeinheit 5 kann die Erfassungseinheit 3 so ansteuern, dass eine Messung in einem vorgegebenen Frequenzband durchgeführt wird. Die Auswerteeinheit 5 kann hierzu auch entsprechende Messparameter vorgeben, beispielsweise das gesamte, interessierende Frequenzband (beispielsweise durch die Übermittlung der Anfangsund Endfrequenz oder der Anfangsfrequenz und der Gesamtbandbreite), die Bandbreite des durchstimmbaren Filters der Empfangseinheit 15, die Abtastbandbreite für das durchstimmbare Filter oder die Abtastrate und die Anzahl der Abtastwerte für die Abtasteinheit 17.

Selbstverständlich kann die Auswerteeinheit 5 auch vorgeben, ob die Erfassungseinheit 3 eine einfache Messung oder eine Mehrfachmessung (mit Mittelung der einzelnen Messergebnisse) durchführen soll.

Die Auswerteeinheit 5 ist des Weiteren so ausgebildet, dass das nachstehend erläuterte Auswerteverfahren durchführbar ist.

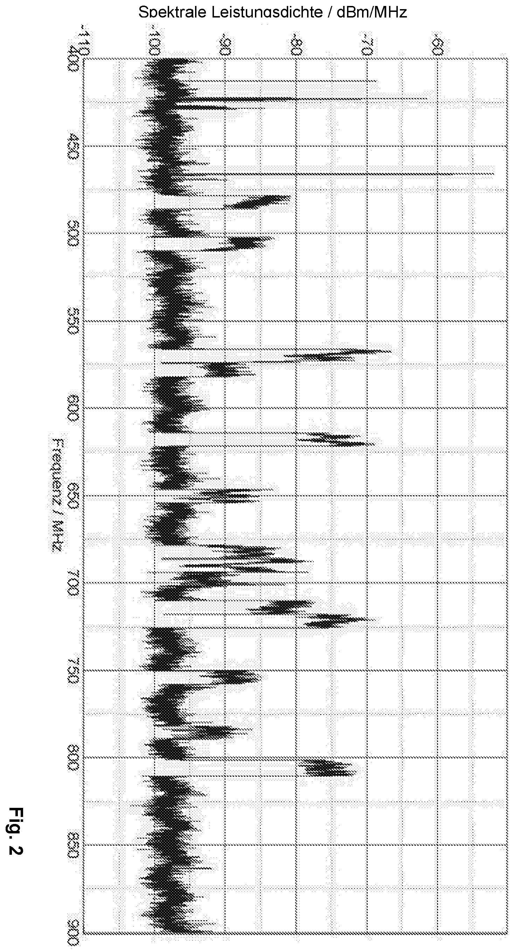

Fig. 2 zeigt ein Beispiel eines Leistungsdichtespektrums im Bereich von 400 MHz bis 900 MHz, welches mittels einer Mehrfachmessung von der Erfassungseinheit 3 ermittelt wurde. Der zugehörige Datensatz umfasst dabei eine Vielzahl von Wertepaaren, wobei jedes Wertepaar aus einem digitalen Wert für die Frequenz in Hz innerhalb des hier vorgegebenen Frequenzbandes und einem Wert für die Leistungsdichte in dBm/MHz besteht. Wie aus Fig. 2 ersichtlich, zeigt dieses Leistungsdichtespektrum ein Signal-Rausch-Gemisch, wobei bei bestimmten Frequenzen beziehungsweise in bestimmten Frequenzabschnitten (bei denen es sich auch um vordefinierte Kanäle handeln kann) ein Signal vorhanden ist. Ein Signal wird man üblicherweise dann als solches in diesem Signal-Rausch-Gemisch detektieren, wenn das Leistungsdichtespektrum Komponenten zeigt, die ausreichend weit oberhalb des Mittelwerts für das gemessene Rauschen liegen. Während im Stand der Technik hierzu meist ein fixer Abstand von beispielsweise 5 dB bis 10 dB (über dem Mittelwert des Rauschens) verwendet wird, um ein Signal zu detektieren, soll im Folgenden ein Verfahren vorgestellt werden, bei dem nicht nur der Mittelwert, sondern auch die Beschaffenheit des Rauschens, insbesondere die charakteristische Verteilungsdichtefunktion und deren Verlauf, mit in die Bestimmung eines Schwellenwerts eingeht.

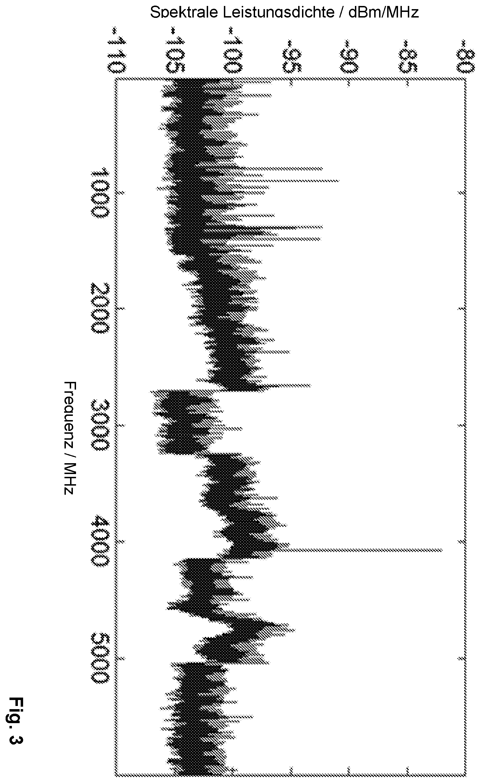

Während Fig. 2 ein Leistungsdichtespektrum in einem Frequenzband zeigt, in welchem keine Umschaltung zwischen mehreren Vorauswahlfiltern der Filtereinheit 13 und/oder ein Umschalten zwischen Empfangsantennen 7 erforderlich war, zeigt Fig. 3 ein Leistungsdichtespektrum, welches das maximal von der betreffenden Erfassungseinheit 3 abdeckbare Frequenzband abdeckt, und bei dessen Messung ein Umschalten zwischen den Vorauswahlfiltern bzw. Antennen erforderlich war. Bei der Erfassung des Leistungsdichtespektrums gemäß Fig. 3 wurden die Eingangsports der Erfassungseinheit 3 bzw. der Schalteinheit 9 für die Signale der Empfangsantennen 7 terminiert, beispielsweise mittels eines definierten Wellenwiderstands. Den Eingangsports wurde also kein zu messendes Signal zugeführt. Es wurden daher ausschließlich die Eigenschaften des Geräts, einschließlich der Rauscheigenschaften, gemessen.

Die zum Teil deutlichen Sprünge im Mittelwert des Rauschens in bestimmten Frequenzbereichen des in Fig. 3 dargestellten Leistungsdichtespektrums resultieren aus den unterschiedlichen Eigenschaften der Vorauswahlfilter der Filtereinheit 13.

Fig. 3 verdeutlicht also, dass es sinnvoll und erforderlich ist, diese Eigenschaften der Erfassungseinheit 3, insbesondere die Eigenschaften der Filtereinheit 13 und gegebenenfalls der Schalteinheit 9, zu korrigieren. Zu diesem Zweck kann ein Korrekturdatensatz bzw. ein Korrektur-Leistungsdichtespektrum, wie es in Fig. 3 gezeigt ist, für das maximale Frequenzband der Erfassungseinheit 3 bestimmt und gespeichert werden.

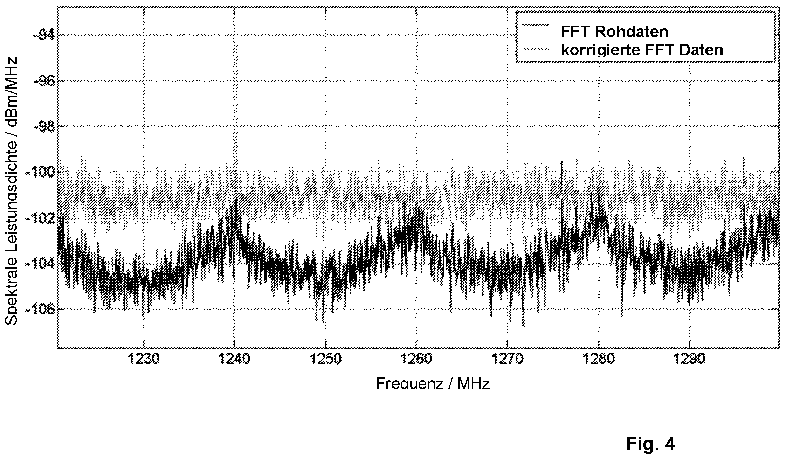

In Fig. 4 zeigt die dunkel dargestellte Kurve einen Ausschnitt des in Fig. 3 dargestellten Korrektur-Leistungsdichtespektrums im Frequenzband von 1200 MHz bis 1300 MHz. Es ist erkennbar, dass die Kurve eine Periodizität mit einer Bandbreite von 20 MHz, also genau der Bandbreite des durchstimmbaren Filters der Empfangseinheit 15, aufweist. Die konvex nach unten verlaufenden Kurvenabschnitte deuten darauf hin, dass die Transmission des durchstimmbaren Filters bei dessen aktueller Mittenfrequenz jeweils am geringsten ist und zu den Rändern des Filterbandes ansteigt. Diese Eigenschaft des durchstimmbaren Filters kann ebenfalls durch eine entsprechende Korrektur der Messdaten berücksichtigt werden.

Die in Fig. 4 heller dargestellte Kurve zeigt das entsprechend korrigierte Leistungsdichtespektrum. Hierzu kann der Verlauf der Messdaten in den bekannten Frequenzbereichen des durchstimmbaren Filters, also jeweils im Durchlassband des Filters, durch einen analytischen Kurvenverlauf angenähert werden, wobei der Kurvenverlauf den Mittelwert des Rauschsignals darstellt. Dies kann mit einem Verfahren der mathematischen Ausgleichsrechnung, beispielsweise dem Least-Squares-Verfahren, erfolgen. Als anzunähernde analytische Funktion kann beispielsweise ein Polynom n-ter Ordnung (mit n beispielsweise zwischen 2 und 5) verwendet werden. Die Korrektur erfolgt dann derart, dass zu jedem Wert der Leistungsdichte bei einer bestimmten Frequenz der Wert, der sich aus der Differenz der angenäherten analytischen Funktion bei dieser Frequenz und dem Minimum der analytischen Funktion ergibt, subtrahiert wird.

Die Anpassung des Polynoms kann, wie vorstehend angedeutet, in jedem Teil-Frequenzbereich erfolgen, der bei der Durchstimmung des durchstimmbaren Filters eingestellt wird. Stellt sich heraus, dass der Verlauf der anzunähernden analytischen Funktion in jeder Stellung des Filters, d.h. bei jeder Mittenfrequenz, im Wesentlichen derselbe ist, so kann die analytische Funktion auch nur unter Verwendung der Daten für eine einzige bestimmte Mittenfrequenz des durchstimmbaren Filters bestimmt werden. Zur Korrektur der Daten bei anderen Mittenfrequenzen des Filters muss dann die so bestimmte analytische Funktion nur jeweils um den Abstand der Mittenfrequenz des aktuellen Frequenzbands des durchstimmbaren Filters von derjenigen Mittenfrequenz verschoben werden, bei der die Bestimmung der analytischen Funktion erfolgt ist.

Zur Korrektur der Eigenschaften der Vorauswahlfilter der Filtereinheit 13 kann entsprechend verfahren werden. Hier muss in jedem Frequenzbereich, in welchem ein bestimmtes Vorauswahlfilter verwendet wird, aus den Messdaten bei geeignet terminierten Eingangsports eine Korrekturkurve mit einer geeigneten analytischen Funktion bestimmt werden. Die Bestimmung der Koeffizienten der analytischen Funktion zu bestmöglichen Annäherung der erfassten Messdaten kann wie oben beschrieben erfolgen. Zur Korrektur müssen dann die in einem bestimmten Frequenzbereich (für ein bestimmtes Vorauswahlfilter) ermittelten Daten unter Verwendung der zugehörigen analytischen Funktion korrigiert werden.

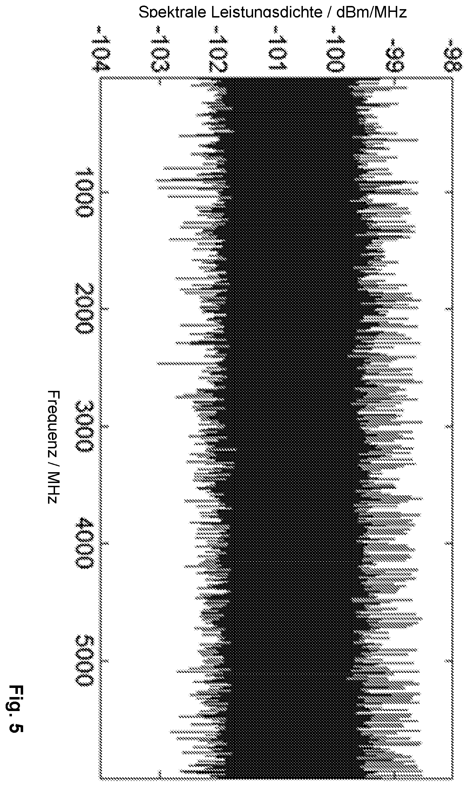

Werden sowohl der Einfluss des einen oder der mehreren Vorauswahlfilter also auch der Einfluss des durchstimmbaren Filters korrigiert, ergibt sich für eine Messung ohne Signal, d.h. bei terminierten Eingangsports der Erfassungseinheit 3, der in Fig. 5 dargestellte Verlauf. Es ist bei dem in Fig. 5 dargestellten korrigierten Datensatz, der mittels einer einfachen Messung (d.h. einem einmaligen Scan des gesamten Frequenzbandes) ermittelt wurde, praktisch nur noch ein Rauschsignal mit einem konstanten Mittelwert bei etwas mehr als -101 dBm/MHz erkennbar.

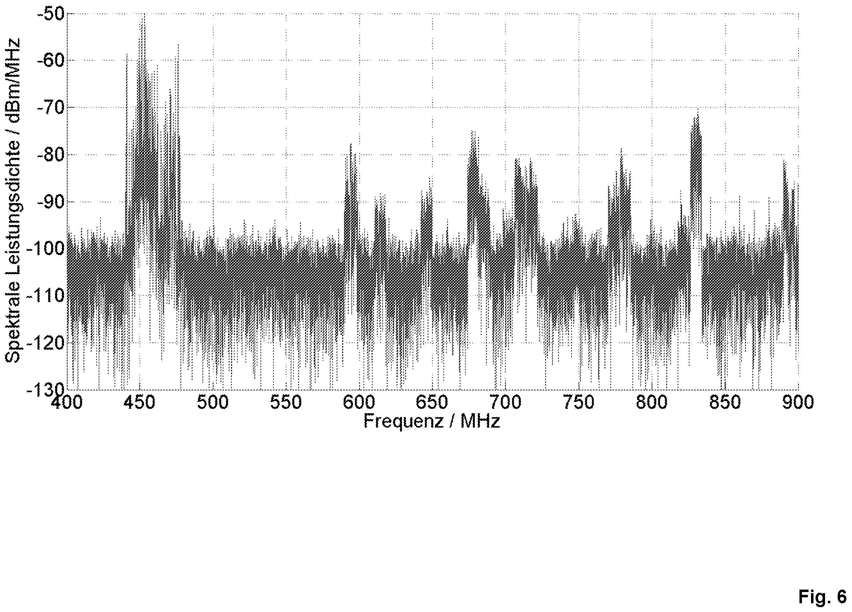

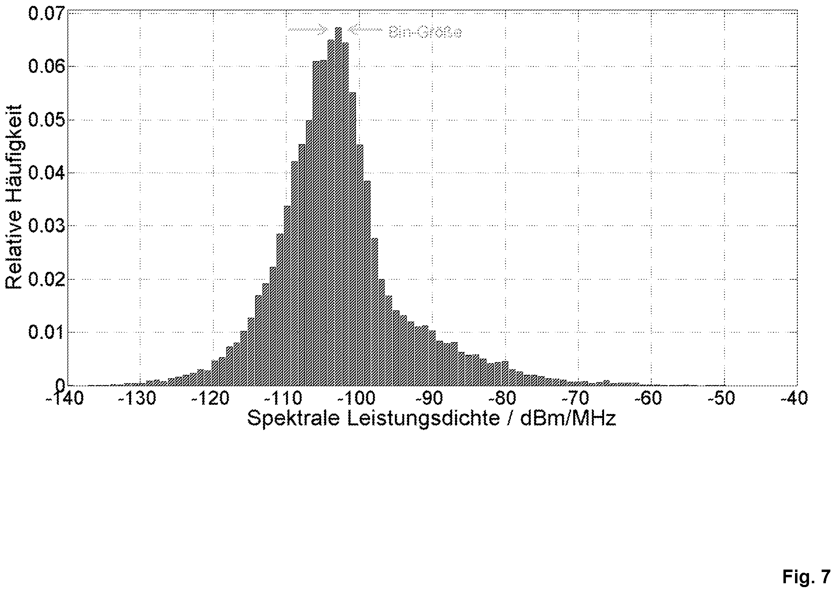

Fig. 6 zeigt ein Leistungsdichtespektrum einer Einfachmessung, das mittels einer Vorrichtung gemäß Fig. 1 erfasst wurde und in der vorstehend erläuterten Weise hinsichtlich der Eigenschaften der Vorrichtung, insbesondere der Filtereigenschaften, korrigiert wurde. Fig. 7 zeigt die zu Fig. 6 zugehörige Häufigkeitsverteilung, die bereits bzgl. der Bin-Größe optimiert wurde und so beschaffen ist, dass der Verlauf der Häufigkeitsverteilung deutlich erkennbar ist. Die Auswahl der Bin-Größe ist dabei vorzugsweise so zu treffen, dass sich eine bestmögliche Annäherung der angenommenen Verteilungsfunktion durch die optimale Bestimmung der Parameter der angenommenen Verteilungsfunktion an die Sub-Häufigkeitsverteilung erzielen lässt. Hierzu wurde in der Veröffentlichung Shimazaki, "A Method for Selecting the Bin Size of a Time Histogram", Neural Computation 19, 1503 bis 1527, 2007, Massachusetts Institute of Technology ein Verfahren zur optimalen Wahl der Bin-Größe beschrieben, welches sich auch zur Verwendung für das Verfahren nach der vorliegenden Erfindung eignet. Vereinfacht dargestellt arbeitet dieses Verfahren zur Auswahl der optimalen Bin-Größe so, dass die Bin-Größe so lange variiert wird, bis sich eine minimale quadratische Abweichung der anzupassenden analytischen Funktion an die Häufigkeitswerte der einzelnen Bins ergibt.

Um nicht nur den Mittelwert des Rauschens, sondern auch weitere Eigenschaften der Verteilungsdichtefunktion des in der Häufigkeitsverteilung nach Fig. 7 enthaltenen Rauschens bei der Bestimmung eines geeigneten Schwellenwerts zu berücksichtigen, ist es erforderlich, zunächst eine Annahme über die dem Rauschsignal zugrunde liegende Art der Verteilungsfunktion zu treffen und die Parameter der Verteilungsfunktion dann möglichst optimal an die Häufigkeitsverteilung anzupassen.

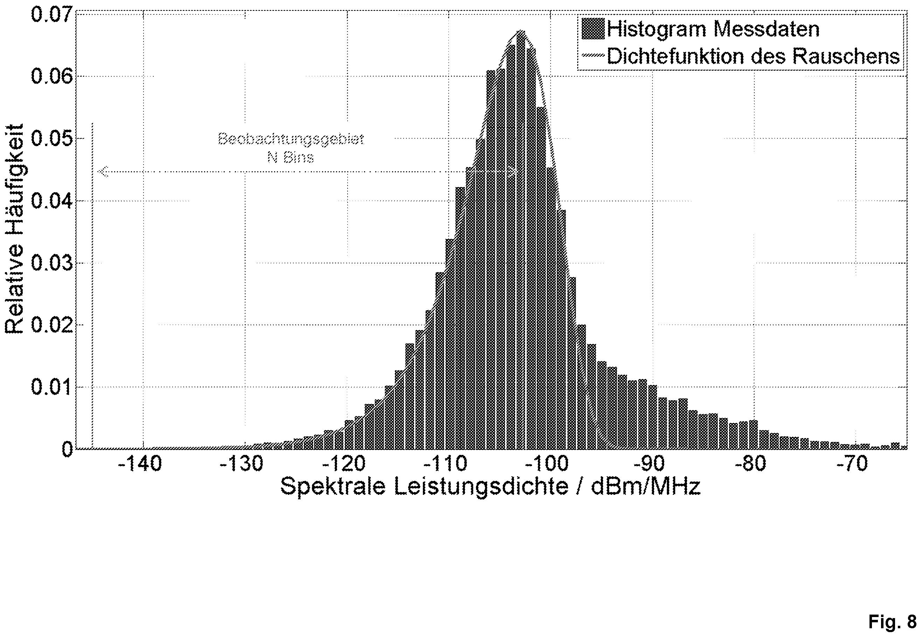

Hierzu empfiehlt es sich zunächst, von der gemessenen Häufigkeitsverteilung für das gesamte, im interessierenden Frequenzband erfasste Leistungsdichtespektrum denjenigen Abschnitt auszuwählen, der überwiegend oder zumindest in relevantem Maß durch das reine Rauschsignal bestimmt ist. Bei der in Fig. 8 dargestellten Häufigkeitsverteilung ist dies der erste Peak bzw. die erste Sub-Häufigkeitsverteilung im Bereich von circa -130 bis -104 dBm/MHz. Die Anteile mit höherer Leistung können mit hoher Wahrscheinlichkeit auch einem entsprechenden Signal und nicht nur dem Rauschen zugeordnet werden.

Fig. 8 zeigt zusätzlich zur relativen Häufigkeitsverteilung der korrigierten Messdaten der ausgewählten Sub-Verteilung eine optimal daran angepasste Verteilungsdichtefunktion.

Da die Häufigkeitsverteilung in Fig. 7 und damit auch die Sub-Häufigkeitsverteilung in Fig. 8 auf einen Datensatz eines Leistungsdichtespektrums zurückgeht, der mittels einer einfach-Messung ermittelt wurde, kann für die Verteilung des Rauschens von einer logarithmierten Rayleigh-Verteilung ausgegangen werden. Diese Verteilungsfunktion folgt der vorstehend dargestellten Gleichung (1). Der Parameter $\sigma$ der Rayleigh-Verteilung kann mittels mathematischer Ausgleichsrechnung so bestimmt werden, dass sich eine optimale Anpassung des Kurvenverlaufs der analytischen Verteilungsdichtefunktion an die Häufigkeitsverteilung ergibt. Auch hierzu kann wiederum das Least-Squares-Verfahren verwendet werden.

Fig. 8 zeigt dabei deutlich, dass sich der Verlauf der optimal angepassten Rayleigh-Verteilung nur in einem bestimmten Bereich, das heißt von einem Minimalwert der Leistungsdichte der gewählten Sub-Häufigkeitsverteilung bis zu einem Maximalwert, gut an die relative Häufigkeitsverteilung der Messwerte anschmiegt. In einem Bereich von größer als circa -98 dBm/MHz zeigen sich deutliche Abweichungen. Dies deutet darauf hin, dass in diesem Bereich neben dem reinen Rauschanteil bereits ein Signalanteil enthalten ist.

Aus diesem Grund wird zur Anpassung der analytischen Verteilungsdichtefunktion nur ein ausgewählter Beobachtungsbereich der zunächst ausgewählten Sub-Häufigkeitsverteilung zur Bestimmung des Parameters σ der Rayleigh-Verteilung verwendet. Die obere Grenze dieses Beobachtungsgebiets kann beispielsweise so gewählt werden, dass diese gleich dem Leistungsdichtewert desjenigen Bins der Häufigkeitsverteilung entspricht, welcher die maximale absolute oder relative Häufigkeit aufweist. Ist anzunehmen, dass auch bereits im Bereich des Maximums der Sub-Häufigkeitsverteilung nicht nur überwiegend reines Rauschen sondern auch Signalanteile eine relevante Rolle spielen, so kann die obere Grenze für das Beobachtungsgebiet auch entsprechend kleiner gewählt werden. Beispielsweise kann derjenige Bin beziehungsweise der dazugehörige Leistungsdichtewert gewählt werden, bei welchem die (relative) Häufigkeit einen Wert von circa 0,9 oder 0,8 beziehungsweise einen Wert von 90% oder 80% des maximalen Werts der Häufigkeit erreicht.

Die Auswahl des minimalen Werts des Beobachtungsgebiets ist relativ unkritisch. Denn bei derart kleinen Leistungsdichtewerten ist regelmäßig nur ein Rauschanteil zu erwarten.

In Fig. 8 ist ein Beobachtungsgebiet für einen Bereich zwischen -148 dBm/Hz und ca. -104 dBm/MHz eingezeichnet, was dem Modalwert der Häufigkeitsverteilung entspricht.

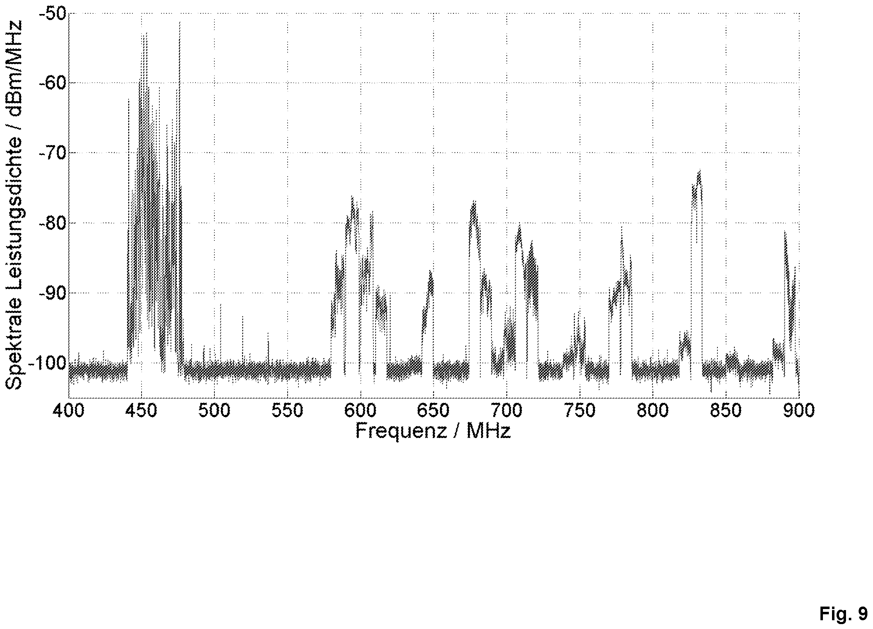

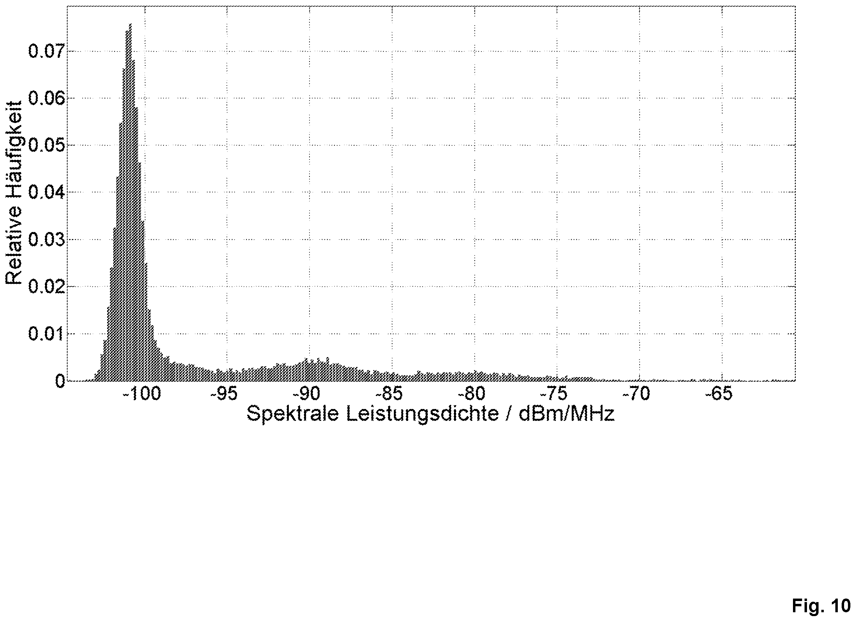

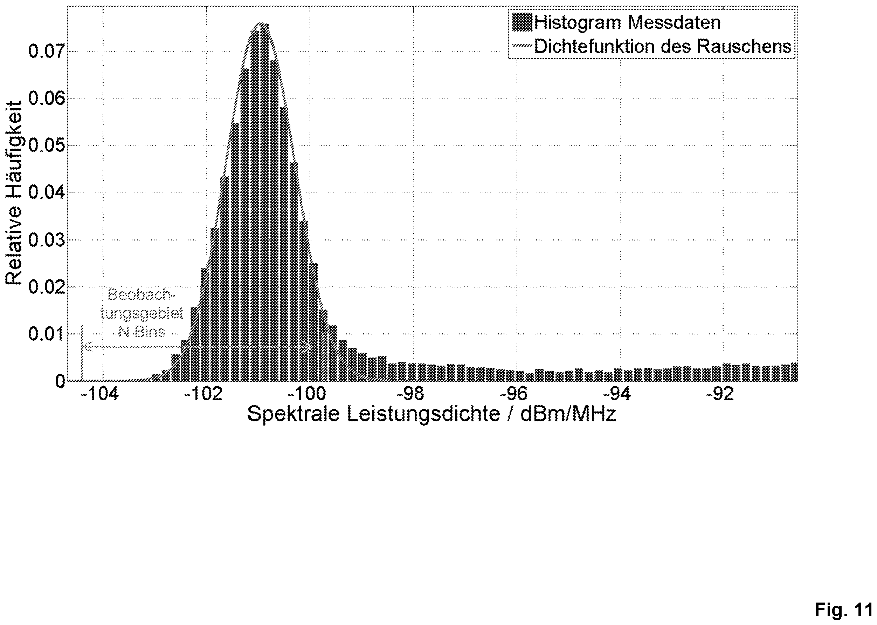

Fig. 9 zeigt ein Leistungsdichtespektrum und Fig. 10 die zugehörige relative Häufigkeitsverteilung, welches mittels Mehrfachmessung, das heißt durch Mittelung mehrerer Scans über das vorgegebene Frequenzband ermittelt wurde. Fig. 11 zeigt dabei die ausgewählte erste Sub-Häufigkeitsverteilung (gesehen von minimalen Leistungsdichtewerten in Richtung höherer Leistungsdichtewerte in der Häufigkeitsverteilung des gesamten erfassten Leistungsdichtespektrums). Es wurde auch bereits eine Optimierung der Bin-Größe in der vorstehend erläuterten Weise vorgenommen.

Infolge der Mehrfach-Messung kann nach dem zentralen Grenzwertsatz von einer Normalverteilung oder Gauß-Verteilung des Rauschens ausgegangen werden. Die Verteilungsdichtefunktion folgt der vorstehend dargestellten Gleichung (2).

Zur Anpassung der analytischen Funktion nach Gleichung (2) kann wiederum das vorstehend beschriebene Verfahren, einschließlich des Verfahrens zur Auswahl eines Beobachtungsgebiets verwendet werden.

Da die Normalverteilung jedoch symmetrisch zu ihrem Mittelwert μ der Leistungsdichte ist, kann hier das Beobachtungsgebiet in Richtung höherer Leistungsdichtewerte so weit vergrößert werden, bis der betreffende Peak nicht mehr (innerhalb vorgegebener Grenzen für eine maximal zulässige Abweichung) symmetrisch ist. Diese Symmetrieeigenschaften können beispielsweise durch einen Vergleich von Steigungswerten an der linken und rechten Flanke des Peaks festgestellt werden. Hierzu können beispielsweise jeweils zwei Werte für die (relative) Häufigkeit vorgegeben werden, beispielsweise Werte von 0,5 und 0,4. Die Werte für die Leistungsdichte, bei welchen diese Häufigkeitswerte jeweils erreicht werden, können durch lineare Interpolation zwischen den beiden Bins, deren Häufigkeitswerte den jeweils vorgegebenen Wert von beispielsweise 0,5 oder 0,4 einschließen, bestimmt werden. Die beiden Wertepaare (auf jeder Flanke des ersten Peaks der Sub-Häufigkeitsverteilung), zwischen denen interpoliert werden muss, sind also jeweils festgelegt durch die Werte, die die jeweiligen Bins definieren, das heißt der (mittige) Leistungsdichtewert des jeweiligen Bins und der zugehörige Wert der (relativen) Häufigkeit.

Sind die Leistungsdichtewerte, bei denen die vorgegebenen Werte der (relativen) Häufigkeit von 0,5 und 0,4 erreicht werden, bestimmt, so kann aus den Wertepaaren bestehend aus dem vorgegebenen Wert von 0,5 beziehungsweise 0,4 und dem zugehörigen interpolierten Wert der Leistungsdichte die Steigung zwischen diesen Punkten berechnet werden. Weicht die Steigung um mehr als eine vorgegebene Grenze, beispielsweise 1% bis 5%, voneinander ab, so kann darauf geschlossen werden, dass im Bereich der rechten Flanke des höheren Peaks in Fig. 11 bereits Signalanteile enthalten sind, die die Symmetrie stören.

Auf diese Weise kann durch eine Bestimmung der Symmetrieeigenschaften des Peaks die maximale obere Grenze des Beobachtungsgebiets ermittelt werden.

Bei Anwendung dieses Verfahrens kann sich selbstverständlich auch herausstellen, dass, innerhalb vorgegebener Grenzen, keine Symmetrie mehr vorliegt. In diesem Fall sollte dann auf das Verfahren zur Auswahl eines Beobachtungsgebiets zurückgegriffen werden, wie es in Verbindung mit der Einfach-Messung bei der Anpassung der Rayleigh-Verteilung beschrieben ist.

Nach der Auswahl des Beobachtungsgebiets wird auch im Fall der Mehrfach-Messung wieder die Ausgleichsrechnung angewandt, um die Parameter μ und σ der Gauß-Verteilung zu bestimmen.

Wird das vorstehend erläuterte Verfahren zur Symmetrieprüfung der (relativen) Häufigkeitsverteilung beziehungsweise Sub-Häufigkeitsverteilung angewandt, so kann der Mittelwert μ auch dadurch bestimmt werden, dass jeweils der Mittelwert der beiden Leistungsdichtewerte bestimmt wird, bei welchen die vorgegebenen Werte (beispielsweise 0,4 oder 0,5) für die (relative) Häufigkeit erreicht werden.

Da das Verfahren zur Symmetrieprüfung selbstverständlich so lange fortgesetzt werden kann, jeweils unter Wahl eines folgenden niedrigeren Wertes für die relative Häufigkeit (ausgehend von einem ersten maximalen vorgegebenen Wert für die relative Häufigkeit von beispielsweise 0,9), ergeben sich eine Mehrzahl von solchen Mittelwerten. Der Mittelwert der Verteilungsdichtefunktion kann dann durch Mittelung dieser "Mittelwerte" gebildet werden.

In diesem Fall muss nur noch die Standardabweichung σ der Normalverteilung durch Ausgleichsrechnung bestimmt werden.

Ist die Verteilungsdichtefunktion für das Rauschen $h_R$ (S) dann bestimmt, so kann aus Gleichung (3) unter Vorgabe eines Werts für die Falschalarmwahrscheinlichkeit ein Schwellenwert λ bestimmt werden.

Das erfindungsgemäße Verfahren zur Bestimmung des Schwellenwerts λ erfordert also lediglich die Vorgabe eines Werts für die Falschalarmwahrscheinlichkeit. Soll also die Wahrscheinlichkeit, dass ein Signal erkannt wird, obwohl im Signal nur Rauschen vorhanden ist, kleiner als ein bestimmter Wert, beispielsweise 5%, sein, so kann aus diesem Wert unter Berücksichtigung der Eigenschaften des im Spektrum erfassten Rauschens der Schwellenwert in geeigneter Weise bestimmt werden.

Die Erfindung ermöglicht es also, einen wesentlich anschaulicheren und sinnvolleren Wert, nämlich einen Wert für die Falschalarmwahrscheinlichkeit vorzugeben und den Schwellenwert λ zur Erkennung eines Signals abhängig hiervon so zu bestimmen, dass der Wert für die Falschalarmwahrscheinlichkeit eingehalten wird.

Abschließend sei erwähnt, dass anstelle einer analytischen Verteilungsdichtefunktion auch eine numerisch oder diskrete vorgegebene Verteilungsdichtefunktion vorgegeben werden könnte. Diese kann beispielsweise in der Auswerteeinheit 5 gespeichert sein. Ein solcher Datensatz oder mehrere solcher Datensätze können hinsichtlich charakteristischer Eigenschaften, z.B. der Form des Verlaufs mittels vorgegebener mathematischer Operationen an den Verlauf der gemessenen Häufigkeitsverteilung angepasst werden. Es wäre auch denkbar, in der vorstehend erläuterten Weise ein Beobachtungsgebiet auszuwählen, und die ermittelte Häufigkeitsverteilung im Beobachtungsgebiet mit dem entsprechenden Teil von gespeicherten Verteilungen bzw. Verteilungsdichten zu vergleichen und dann diejenige gespeicherte Verteilung bzw. Verteilungsdichte auszuwählen, die im Beobachtungsgebiet am besten übereinstimmt.

Die so bestimmte numerische oder diskrete Verteilung oder Verteilungsdichte für ein bestimmtes Rauschverhalten kann dann verwendet werden, um hieraus den Schwellenwert λ zu berechnen.

Bezugszeichenliste

f    Frequenz S(f) bzw. (S(f)) Leistungsdichte $h_R$(s) bzw. ($h_R$(s)) Verteilungsdichtefunktion $P_{fa}$ bzw. ($P_{fa}$) Falschalarmwahrscheinlichkeit λ bzw. (λ) Schwellenwert
1    Vorrichtung zum Spektrum-Monitoring
3    Erfassungseinheit
5    Auswerteeinheit
7    Empfangsantenne
9    Schalteinheit
11   Steuereinheit
13   Filtereinheit
15   Empfangseinheit
17   Abtasteinheit
19   digitale Signalprozessoreinheit
21   Interfaceeinheit

**Patentansprüche**

1.   Verfahren zum Spektrum-Monitoring eines vorgegebenen Frequenzbandes, bei dem

(a) die spektrale Leistungsdichte (S(f)) innerhalb des vorgegebenen Frequenzbandes für alle in dem Frequenzband enthaltenen Rausch- und Signalanteile bestimmt wird und
(b) für das Detektieren des Vorhandenseins eines oder mehrerer Signale innerhalb des vorgegebenen Frequenzbandes das Überschreiten eines Schwellenwertes (A) durch die spektrale Leistungsdichte (S(f)) ausgewertet wird,
**dadurch gekennzeichnet,**
(c) **dass** der Schwellenwert (A) abhängig von einer Schätzung einer Verteilungsdichte ($h_R$(S)) für den Rauschanteil der spektralen Leistungsdichte (S(f)) innerhalb des vorgegebenen Frequenzbandes und einem vorgegebenen Wert für die Falschalarmwahrscheinlichkeit ($P_{fa}$) berechnet wird,

(d) **dass** der Schwellenwert (A) unter Verwendung einer aus dem Leistungsdichtespektrum (S(f)) ermittelten Sub-Häufigkeitsverteilung berechnet wird,

(e) **dass** zur Ermittlung der Sub-Häufigkeitsverteilung die Häufigkeitsverteilung der spektralen Leistungsdichte (S(f)) im gesamten vorgegebenen Frequenzband bestimmt wird, und dass als Sub-Häufigkeitsverteilung derjenige Abschnitt der Häufigkeitsverteilung verwendet wird, in welchem die Werte für die Häufigkeit einen peakartigen Verlauf zeigen und in welchem die Werte für die quantisierte Leistungsdichte (S(f)) zumindest den Bereich abdecken, in welchem reines Rauschen erwartet werden kann.

2. Verfahren nach Anspruch 1, **dadurch gekennzeichnet, dass** der verwendete Abschnitt der Häufigkeitsverteilung so gewählt wird, dass, von niedrigen zu höheren Werten der quantisierten Leistungsdichte gesehen, der erste auftretende peakartige Verlauf der Häufigkeitsverteilung in dem verwendeten Abschnitt enthalten ist, wobei die obere Grenze des Abschnitts in Richtung höherer Werte für die quantisierte Leistungsdichte (S(f)) vorzugsweise so gewählt wird, dass kein weiterer isolierter peakartiger Verlauf in dem Abschnitt enthalten ist.

3. Verfahren nach einem der vorhergehenden Ansprüche, **dadurch gekennzeichnet, dass** die Bin-Größe der Häufigkeitsverteilung oder Sub-Häufigkeitsverteilung hinsichtlich der Anpassbarkeit einer analytischen Verteilungsdichtefunktion optimiert wird.

4. Verfahren nach einem der Ansprüche 1 bis 3, **dadurch gekennzeichnet, dass** zur Schätzung der Verteilungsdichte des Rauschanteils eine analytische Verteilungsdichtefunktion ($h_R(S)$) verwendet wird, wobei der oder die Parameter der Verteilungsdichtefunktion ($h_R(S)$) mittels eines mathematischen Verfahrens zur Ausgleichsrechnung, vorzugsweise mittels des Least-Squares-Verfahrens, derart bestimmt werden, dass die Verteilungsdichtefunktion ($h_R(S)$) an den Verlauf der Sub-Häufigkeitsverteilung angepasst wird.

5. Verfahren nach Anspruch 4, **dadurch gekennzeichnet, dass** für die Durchführung der Ausgleichsrechnung nur ein Beobachtungsgebiet zwischen einem unteren und einem oberen Wert der spektralen Leistungsdichte der Sub-Häufigkeitsverteilung verwendet wird, wobei das Beobachtungsgebiet so gewählt wird, dass die Werte für die Häufigkeit im Beobachtungsgebiet im Wesentlichen nur durch den Rauschanteil bestimmt sind.

6. Verfahren nach einem der vorhergehenden Ansprüche, **dadurch gekennzeichnet, dass** zur Bestimmung der spektralen Leistungsdichte (S(f)) im vorgegebenen Frequenzband eine einfache Messung durchgeführt wird und dass in diesem Fall zur Schätzung der Verteilungsdichte des Rauschanteils eine logarithmierte Rayleighverteilung verwendet wird.

7. Verfahren nach Anspruch 5 und 6, **dadurch gekennzeichnet, dass** der obere Wert der spektralen Leistungsdichte (S(f)) des Beobachtungsgebiets

(a) gleich dem Wert der spektralen Leistungsdichte ist, bei welchem das Maximum der Häufigkeitsverteilung vorliegt, oder

(b) kleiner ist als der Wert der spektralen Leistungsdichte (S(f)) ist, bei welchem das Maximum der Häufigkeitsverteilung vorliegt und gleich einem Wert, bei dem die Häufigkeit gleich einem vorbestimmten Wert ist, beispielsweise gleich einem Wert von 80 Prozent bis 90 Prozent des maximalen Wertes für die Häufigkeit.

8. Verfahren nach einem der Ansprüche 1 bis 5, **dadurch gekennzeichnet, dass** zur Bestimmung der spektralen Leistungsdichte (S(f)) im vorgegebenen Frequenzband eine mehrfache Messung durchgeführt und die mehrfachen Messungen gemittelt werden und dass in diesem Fall zur Schätzung der Verteilungsdichte des Rauschanteils eine Gauß-Verteilung verwendet wird.

9. Verfahren nach Anspruch 5 und 8, **dadurch gekennzeichnet, dass** der obere Wert der spektralen Leistungsdichte (S(f)) des Beobachtungsgebiets kleiner oder gleich dem Wert der spektralen Leistungsdichte (S(f)) ist, bis zu welchem, in Richtung zunehmender Werte für die spektrale Leistungsdichte (S(f)) gesehen, die abfallende Flanke der Häufigkeitsverteilung noch symmetrisch zum entsprechenden Bereich der ansteigenden Flanke ist oder nur eine zulässige Abweichung innerhalb einer vorgegebenen Schranke aufweist.

10. Verfahren nach einem der Ansprüche 4 bis 9, **dadurch gekennzeichnet, dass** der Schwellenwert ($\lambda$) unter Verwendung der Beziehung

$$\int_{-\infty}^{\lambda} h_R(S)dS = 1 - P_{fa}$$

ermittelt wird, wobei mit $\lambda$ der Schwellenwert, mit S die spektrale Leistungsdichte, mit $h_R(S)$ die Verteilungsdichtefunktion des Rauschanteils und mit $P_{fa}$ die Falschalarmwahrscheinlichkeit bezeichnet ist.

**11.** Vorrichtung zum Spektrum-Monitoring eines vorgegebenen Frequenzbandes

(a) mit einer Erfassungseinheit (3) zur Erfassung von Daten der spektralen Leistungsdichte (S(f)) innerhalb des vorgegebenen Frequenzbandes für alle in dem Frequenzband enthaltenen Rausch- und Signalanteile und
(b) mit einer mit der Erfassungseinheit (3) verbundenen Auswerteeinheit (5), welcher die Daten der spektralen Leistungsdichte (S(f)) zuführbar sind,
(c) wobei die Auswerteeinheit (5) für das Detektieren eines oder mehrerer Signale innerhalb des vorgegebenen Frequenzbandes ausgebildet ist, indem sie Daten der spektralen Leistungsdichte (S(f)) mit einem vorgegebenen Schwellenwert (A) vergleicht,
**dadurch gekennzeichnet,**
(d) **dass** die Auswerteeinheit (5) so ausgebildet ist, dass sie den Schwellenwert ($\lambda$) abhängig von einer Schätzung der Verteilungsdichte des Rauschanteils der Daten der spektralen Leistungsdichte (S(f)) im vorgegebenen Frequenzband und einem vorgegebenen Wert für die Falschalarmwahrscheinlichkeit ($P_{fa}$) berechnet
(e) wobei der Schwellenwert ($\lambda$) unter Verwendung einer aus dem Leistungsdichtespektrum (S(f)) ermittelten Sub-Häufigkeitsverteilung berechnet wird,
(f) wobei zur Ermittlung der Sub-Häufigkeitsverteilung die Häufigkeitsverteilung der spektralen Leistungsdichte (S(f)) im gesamten vorgegebenen Frequenzband bestimmt wird, und wobei als Sub-Häufigkeitsverteilung derjenige Abschnitt der Häufigkeitsverteilung verwendet wird, in welchem die Werte für die Häufigkeit einen peakartigen Verlauf zeigen und in welchem die Werte für die quantisierte Leistungsdichte (S(f)) zumindest den Bereich abdecken, in welchem reines Rauschen erwartet werden kann.

**12.** Vorrichtung nach Anspruch 11, **dadurch gekennzeichnet, dass** die Erfassungseinheit (3) so ausgebildet ist,

(a) dass das an einem oder mehreren Eingangsports zugeführte Eingangssignal oder ein hieraus abgeleitetes Signal einem durchstimmbaren Bandpassfilter zuführt wird,
(b) dass das Bandpassfilter schrittweise so durchgestimmt wird, dass das vorgegebene Frequenzband abgedeckt wird,
(c) dass in jedem Schritt das gefilterte Signal über ein vorbestimmbares Zeitintervall abgetastet wird und aus den digitalisierten Abtastwerten mittels einer numerischen Frequenztransformation, beispielsweise der Fast-Fourier-Transformation, Daten der spektralen Leistungsdichte (S(f)) für das betreffende aktuelle Frequenzband des Bandpassfilters ermittelt werden, und
(d) dass aus den in jedem Schritt ermittelten Daten der spektralen Leistungsdichte (S(f)), die Daten für die spektrale Leistungsdichte (S(f)) im gesamten vorgegebenen Frequenzband ermittelt werden.

**13.** Vorrichtung nach Anspruch 11 oder 12, **dadurch gekennzeichnet, dass** die Auswerteeinheit (5) zur Durchführung des Verfahrens nach einem der Ansprüche 2 bis 10 ausgebildet ist.

**Claims**

**1.** A method for spectrum-monitoring a given frequency band in which

(a) the spectral power density (S(f)) within the given frequency band is determined for all the noise and signal components contained in the frequency band, and
(b) in order to detect the presence of one or more signals within the given frequency band the instance of exceeding a threshold value ($\lambda$) by the spectral power density (S(f)) is evaluated,
**characterised in that**
(c) the threshold value ($\lambda$) is calculated as a function of an estimation of a distribution density ($h_R(S)$) for the noise component of the spectral power density (S(f)) within the given frequency band and a given value for the probability of false alarms ($P_{fa}$),

(d) the threshold value ($\lambda$) is calculated using a sub-frequency distribution ascertained from the power-density spectrum (S(f)),

(e) in order to ascertain the sub-frequency distribution the frequency distribution of the spectral power density (S(f)) is determined throughout the given frequency band, and that section of the frequency distribution in which the values for the frequency exhibit a peak-like characteristic and in which the values for the quantized power density (S(f)) cover at least the region in which pure noise can be expected is used as the sub-frequency distribution.

2. A method according to claim 1, **characterised in that** the section of the frequency distribution that is used is selected so that, viewed from low to higher values of the quantized power density, the first peak-like characteristic of the frequency distribution that occurs is contained in the section used, wherein the upper limit of the section in the direction of higher values for the quantized power density (S(f)) is preferably selected so that no further isolated peak-like characteristic is contained in the section.

3. A method according to one of the preceding claims, **characterised in that** the bin size of the frequency distribution or sub-frequency distribution is optimized with regard to the adaptability of an analytical distribution-density function.

4. A method according to one of claims 1 to 3, **characterised in that** an analytical distribution-density function ($h_R(S)$) is used to estimate the distribution density of the noise component, wherein the parameter or parameters of the distribution-density function ($h_R(S)$) is or are determined by means of a mathematical process for the balancing calculation, preferably by means of the least squares process, in such a way that the distribution-density function ($h_R(S)$) is adapted to the characteristic of the sub-frequency distribution.

5. A method according to claim 4, **characterised in that** in order to execute the balancing calculation only one observation area is used between a lower and an upper value of the spectral power density of the sub-frequency distribution, wherein the observation area is selected so that the values for the frequency in the observation area are determined substantially just by the noise component.

6. A method according to one of the preceding claims, **characterised in that** a single measurement is carried out in order to determine the spectral power density (S(f)) in the given frequency band, and in this case a logarithmized Rayleigh distribution is used in order to estimate the distribution density of the noise component.

7. A method according to claim 5 and 6, **characterised in that** the upper value of the spectral power density (S(f)) of the observation area

(a) is equal to the value of the spectral power density in which the maximum of the frequency distribution is present, or

(b) is smaller than the value of the spectral power density (S(f)) in which the maximum of the frequency distribution is present and equal to a value in which the frequency is equal to a predetermined value, for example equal to a value of 80 percent to 90 percent of the maximum value for the frequency.

8. A method according to one of claims 1 to 5, **characterised in that** a multiple measurement is carried out in order to determine the spectral power density (S(f)) in the given frequency band, and the mean is taken of the multiple measurements, and in this case a Gaussian distribution is used in order to estimate the distribution density of the noise component.

9. A method according to claim 5 and 8, **characterised in that** the upper value of the spectral power density (S(f)) of the observation area is smaller than or equal to the value of the spectral power density (S(f)) up to which, viewed in the direction of increasing values for the spectral power density (S(f)), the falling edge of the frequency distribution is still symmetrical to the corresponding region of the rising edge or has only a permissible deviation within a given limit.

10. A method according to one of claims 4 to 9, **characterised in that** the threshold value ($\lambda$) is ascertained using the relationship

$$\int_{-\infty}^{\lambda} h_R(S)dS = 1 - P_{fa}$$

wherein the threshold value is denoted by $\lambda$, the spectral power density by S, the distribution-density function of the noise component by $h_R(S)$, and the probability of false alarms by $P_{fa}$.

**11.** A device for spectrum-monitoring a given frequency band

(a) having an acquisition unit (3) to acquire data of the spectral power density (S(f)) within the given frequency band for all the noise and signal components contained in the frequency band, and
(b) having an evaluation unit (5) which is connected to the acquisition unit (3) and to which the data of the spectral power density (S(f)) can be fed,
(c) wherein the evaluation unit (5) for the detection of one or more signals within the given frequency band is configured in that it compares data of the spectral power density (S(f)) with a given threshold value ($\lambda$),
**characterised in that**
(d) the evaluation unit (5) is configured so that it calculates the threshold value ($\lambda$) as a function of an estimation of the distribution density of the noise component of the data of the spectral power density (S(f)) in the given frequency band and a given value for the probability of false alarms ($P_{fa}$),
(e) wherein the threshold value ($\lambda$) is calculated using a sub-frequency distribution ascertained from the power-density spectrum (S(f)),
(f) wherein in order to ascertain the sub-frequency distribution the frequency distribution of the spectral power density (S(f)) is determined throughout the given frequency band, and wherein that section of the frequency distribution in which the values for the frequency exhibit a peak-like characteristic and in which the values for the quantized power density (S(f)) cover at least the region in which pure noise can be expected is used as the sub-frequency distribution.

**12.** A device according to claim 11, **characterised in that** the acquisition unit (3) is configured so that

(a) the input signal fed to one or more input ports or a signal derived therefrom is fed to a tunable band-pass filter,
(b) the band-pass filter is tuned step by step so that the given frequency band is covered,
(c) in each step the filtered signal is sampled over a predeterminable interval in time, and data of the spectral power density (S(f)) are ascertained for the relevant current frequency band of the band-pass filter from the digitized sample values by means of a numerical frequency transformation, for example the Fast-Fourier transformation, and
(d) the data for the spectral power density (S(f)) are ascertained throughout the given frequency band from the data of the spectral power density (S(f)) ascertained in each step.

**13.** A device according to claim 11 or 12, **characterised in that** the evaluation unit (5) is configured in order to carry out the method according to one of claims 2 to 10.

**Revendications**

**1.** Procédé de surveillance du spectre d'une bande de fréquences prédéfinie, dans lequel

($\lambda$) la densité de puissance spectrale (S(f)) à l'intérieur de la bande de fréquences prédéfinie est établie pour toutes les composantes de signaux et de bruit contenues dans la bande de fréquences et
(b) pour la détection de la présence d'un ou de plusieurs signaux à l'intérieur de la bande de fréquences prédéfinie, le dépassement d'une valeur de seuil ($\lambda$) par la densité de puissance spectrale (S(f)) est évalué, caractérisé,
(c) en ce que la valeur de seuil ($\lambda$) est calculée en fonction d'une estimation d'une densité de distribution ($h_R(S)$) pour la composante de bruit de la densité de puissance spectrale (S(f)) à l'intérieur de la bande de fréquences prédéfinie et en fonction d'une valeur prédéfinie pour la probabilité de fausse alarme ($P_{fa}$),
(d) en ce que la valeur de seuil ($\lambda$) est calculée à l'aide d'une sous-distribution de fréquences déterminée à partir du spectre de densité de puissance (S(f)),
(e) en ce que, pour la détermination de la sous-distribution de fréquences, la distribution de fréquences de la

**14**

densité de puissance spectrale (S(f)) est établie dans toute la bande de fréquences prédéfinie et en ce qu'est employé en tant que sous-distribution de fréquences le segment de la distribution de fréquences dans lequel les valeurs pour la fréquence montrent un profil en forme de pic et dans lequel les valeurs pour la densité de puissance (S(f)) quantifiée recouvrent au moins la plage dans laquelle on peut attendre un bruit pur.

2. Procédé selon la revendication 1, **caractérisé en ce que** le segment employé de la distribution de fréquences est choisi de sorte que, vu des valeurs basses aux valeurs hautes de la densité de puissance quantifiée, le premier profil en forme de pic survenant de la distribution de fréquences est contenu dans le segment employé, dans lequel la limite supérieure du segment en direction des valeurs plus élevées est choisie de préférence pour la densité de puissance quantifiée (S(f)) de sorte qu'aucun autre profil en forme de pic isolé n'est contenu dans le segment.

3. Procédé selon l'une quelconque des revendications précédentes, **caractérisé en ce que** la taille des classes de la distribution de fréquences ou de la sous-distribution de fréquences est optimisée en ce qui concerne l'adaptabilité d'une fonction analytique de densité de distribution.

4. Procédé selon l'une quelconque des revendications 1 à 3, **caractérisé en ce que**, pour l'estimation de la densité de distribution des composantes de bruit, une fonction analytique de densité de distribution ($h_R(S)$) est employée, dans lequel le ou les paramètres de la fonction de densité de distribution ($h_R(S)$) sont établis au moyen d'un procédé mathématique de calcul de compensation, de préférence au moyen d'un procédé des moindres carrés, de manière telle que la fonction de densité de distribution ($h_R(S)$) est adaptée au profil de la sous-distribution de fréquences.

5. Procédé selon la revendication 4, **caractérisé en ce que**, pour l'exécution du calcul de compensation, un seul domaine d'observation entre une valeur inférieure et une valeur supérieure de la densité de puissance spectrale de la sous-distribution de fréquences est employé, dans lequel le domaine d'observation est choisi de sorte que les valeurs pour la fréquence ne sont établies dans le domaine d'observation essentiellement que par la composante de bruit.

6. Procédé selon l'une quelconque des revendications précédentes, **caractérisé en ce que**, pour établir la densité de puissance spectrale (S(f)) dans la bande de fréquences prédéfinie, une mesure unique est exécutée et **en ce que**, dans ce cas, pour l'estimation de la densité de distribution de la composante de bruit, une distribution logarithmique de Rayleigh est employée.

7. Procédé selon la revendication 5 et 6, **caractérisé en ce que**, la valeur supérieure de la densité de puissance spectrale (S(f)) du domaine d'observation

(λ) est égale à la valeur de la densité de puissance spectrale, pour laquelle le maximum de la distribution de fréquences est présent, ou
(b) est plus petite que la valeur de la densité de puissance spectrale (S(f)), pour laquelle le maximum de la distribution de fréquences est présent et est égale à une valeur pour laquelle la fréquence est égale à une valeur pré-établie, par exemple égale à une valeur de 80 à 90 pour cent de la valeur maximale pour la fréquence.

8. Procédé selon l'une quelconque des revendications 1 à 5, **caractérisé en ce que**, pour établir la densité de puissance spectrale (S(f)) dans la bande de fréquences prédéfinie, un ensemble de mesures est exécuté et les multiples mesures sont moyennées et **en ce que**, dans ce cas, pour l'estimation de la densité de distribution de la composante de bruit, une distribution de Gauss est employée.

9. Procédé selon la revendication 5 et 8, **caractérisé en ce que** la valeur supérieure de la densité de puissance spectrale (S(f)) du domaine d'observation est inférieure ou égale à la valeur de la densité de puissance spectrale (S(f)) jusqu'à laquelle, vu en direction des valeurs croissantes pour la densité de puissance spectrale (S(f)), le front descendant de la distribution de fréquences est encore symétrique au domaine correspondant du front ascendant ou comprend uniquement un écart admissible à l'intérieur d'une tolérance prédéfinie.

10. Procédé selon l'une quelconque des revendications 4 à 9, **caractérisé en ce que** la valeur de seuil (λ) est déterminée à l'aide de la relation

$$\int\limits_{-\infty}^{\lambda} h_R(S)dS = 1 - P_{fa}$$

dans lequel $\lambda$ désigne la valeur de seuil, S désigne la densité de puissance spectrale, hR(S) désigne la fonction de densité de distribution de la composante de bruit et $P_{fa}$ désigne la probabilité de fausse alarme.

**11.** Dispositif de surveillance du spectre d'une bande de fréquences prédéfinie

($\lambda$) avec une unité de détection (3) pour la détection de données de la densité de puissance spectrale (S(f)) à l'intérieur de la bande de fréquences prédéfinie pour toutes les composantes de bruit et de signal contenues dans la bande de fréquences et

(b) avec une unité d'évaluation (5), reliée à l'unité de détection (3), à laquelle les données de la densité de puissance spectrale (S(f)) peuvent être amenées,

(c) dans lequel l'unité d'évaluation (5) est conçue pour la détection d'un ou de plusieurs signaux à l'intérieur de la bande de fréquences prédéfinie du fait qu'elle compare des données de la densité de puissance spectrale (S(f)) à une valeur de seuil prédéfinie ($\lambda$),

**caractérisé en ce que**

(d) l'unité d'évaluation (5) est conçue de sorte qu'elle calcule la valeur de seuil ($\lambda$) en fonction d'une estimation de la densité de distribution de la composante de bruit des données de la densité de puissance spectrale (S(f)) dans la bande de fréquences prédéfinie et en fonction d'une valeur prédéfinie pour la probabilité de fausse alarme ($P_{fa}$),

(e) dans lequel la valeur de seuil ($\lambda$) est calculée à l'aide d'une sous-distribution de fréquences déterminée à partir du spectre de densité de puissance (S(f)),

(f) dans lequel pour la détermination de la sous-distribution de fréquences, la distribution de fréquences de la densité de puissance spectrale (S(f)) est établie dans toute la bande de fréquences prédéfinie, et dans lequel on emploie, en tant que sous-distribution de fréquences, le segment de la distribution de fréquences dans lequel les valeurs pour la fréquence montrent un profil en forme de pic et dans lequel les valeurs pour la densité de puissance quantifiée (S(f)) recouvrent au moins le domaine dans lequel on peut attendre un bruit pur.

**12.** Dispositif selon la revendication 11, **caractérisé en ce que** l'unité de détection (3) est conçue de sorte

($\lambda$) que le signal d'entrée amené à un ou plusieurs ports d'entrée ou un signal, qui en est déduit, est amené à un filtre passe bande accordable,

(b) que le filtre passe bande est accordé étape par étape de sorte que la bande de fréquences prédéfinie est recouverte,

(c) que, dans chaque étape, le signal filtré est échantillonné pendant un intervalle de temps définissable au préalable et à partir des valeurs d'échantillonnage numérisées au moyen d'une transformation de fréquence numérique, par exemple une transformée de Fourier rapide, des données de la densité de puissance spectrale (S(f)) sont déterminées pour la bande de fréquences actuelle concernée du filtre passe bande, et

(d) que, à partir des données déterminées à chaque étape, de la densité de puissance spectrale (S(f)), les données pour la densité de puissance spectrale (S(f)) sont déterminées dans toute la bande de fréquences prédéfinie.

**13.** Dispositif selon la revendication 11 ou 12, **caractérisé en ce que** l'unité d'évaluation (5) est conçue pour l'exécution du procédé selon l'une quelconque des revendications 2 à 10.

Fig. 1

Fig. 2

Fig. 3

Fig. 4

Fig. 5

EP 3 092 756 B1

Fig. 6

22

Fig. 7

EP 3 092 756 B1

Fig. 8

Fig. 9

EP 3 092 756 B1

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CHRISTIAN WEBER.** Automatic Radio Monitoring Automatic Radio Monitoring for Efficient Future Spectrum Management. *LS SUMMIT 2013,* 03. Juli 2013, 1-15
- Handbook Spektrum Monitoring. 2011, 177
- **MEFTAH MEHDAWI et al.** Spectrum Occupancy Survey In HULL-UK for Cognitive Radio Applications: Measurement & Analysis. *IJSTR,* April 2013, vol. 2 (4
- **SHIMAZAKI.** A Method for Selecting the Bin Size of a Time Histogram. *Neural Computation,* 2007, vol. 19, 1503-1527